# EUROPÄISCHE PATENTSCHRIFT

(11) **EP 0 719 977 B1**
(45) Veröffentlichungstag und Bekanntmachung des Hinweises auf die Patenterteilung: **17.02.1999**
(21) Anmeldenummer: 95118825.9
(22) Anmeldetag: 30.11.1995
(51) Int. Cl.: F16N 11/10

(54) **Schmierstoffspender zur gasgesteuerten Abgabe eines Schmierstoffes**
Lubricant dispenser for gas controlled dispensing of lubricant to a machine
Distributeur à graisse pour délivrance commandé par gaz d'une graisse à une machine

(30) Priorität: 28.12.1994 DE 4446463
(43) Veröffentlichungstag der Anmeldung: 03.07.1996
(73) Patentinhaber: Satzinger GmbH & Co., 97717 Euerdorf (DE)
(72) Erfinder: Graf, Walter, D-97717 Euerdorf (DE)
(74) Vertreter: Honke, Manfred, Dr.-Ing.

(56) Entgegenhaltungen:
- DE-A- 4 209 776
- DE-C- 4 331 946

## Beschreibung

Die Erfindung betrifft einen Schmierstoffspender nach dem Oberbegriff des Patentanspruches 1.

Bei dem bekannten Schmierstoffspender, von dem die Erfindung ausgeht (DE 42 09 776 A1, insbesondere Figur 5), überragen die abdeckkappenseitigen Hebelarme der zweiarmigen Hebel die Bereiche zwischen den Spalträumen. Beim Einschrauben des Magazins in die Magazinaufnahme erfüllen die abdeckkappenseitigen Hebelarme eine Doppelfunktion: Sie halten einerseits das Gasentwicklungselement und übertragen andererseits die durch das Einschrauben erzeugten Absprengkräfte. Das hat sich bewährt, verlangt aber eine entsprechend starke und stabile Auslegung des Magazins insgesamt, wenn anders die Doppelfunktion der zweiarmigen Hebel zu unkontrollierten Verformungen eben dieser Hebel führt. Insbesondere die Gelenkelemente müssen verhältnismäßig stark ausgeführt sein. Zwar ist vorgeschlagen worden (DE 42 09 776 A1, Spalte 3, Zeile 32-33), die Anordnung so zu treffen, daß der Absprengboden durch Beaufschlagung mit Bauteilen des Magazins beim Einschrauben des Magazins in die Magazinaufnahme absprengbar ist, eine konkrete Maßnahme, wie dieses einfach und funktionssicher, bei im übrigen einfacher Fertigung, bewirkt werden kann, ist jedoch nicht angegeben.

Der Erfindung liegt das technische Problem zugrunde, einen Schmierstoffspender mit den Merkmalen des Oberbegriffes des Patentanspruches 1 so zu gestalten, daß das Absprengen des Absprengbodens und die Freigabe des Gasentwicklungselementes funktionssicher erfolgen, und gleichzeitig das Magazin in fertigungstechnischer Hinsicht zu vereinfachen.

Die Lösung dieses technischen Problems ist durch die Summe der Merkmale des Patentanspruches 1 gegeben und durch die besonderen Maßnahmen bestimmt, die den Kennzeichnungsteil des Patentanspruches 1 bilden. Eine bevorzugte Ausführungsform des erfindungsgemäßen Schmierstoffspenders ist Gegenstand des Patentanspruches 2.

Die Erfindung geht von der Erkenntnis aus, daß bei einem Schmierstoffspender des grundsätzlichen Aufbaus, der sich aus dem Oberbegriff des Patentanspruches 1 ergibt, mit einem verhältnismäßigen einfachen, leichten und leicht herstellbaren Magazin gearbeitet werden kann, wenn die Funktionen Absprengen des Absprengbodens einerseits, Freigeben des Gasentwicklungselementes andererseits voneinander getrennt sind, so daß diese Funktionen sich nicht gegenseitig beeinflussen. Überraschenderweise können bei der erfindungsgemäßen Ausführungsform das Magazin mit dem Aufnahmekammern, die zweiarmigen Hebel und die Gelenkelemente einteilig im Wege des Spritzgießens aus thermoplastischem Kunststoff geformt werden.

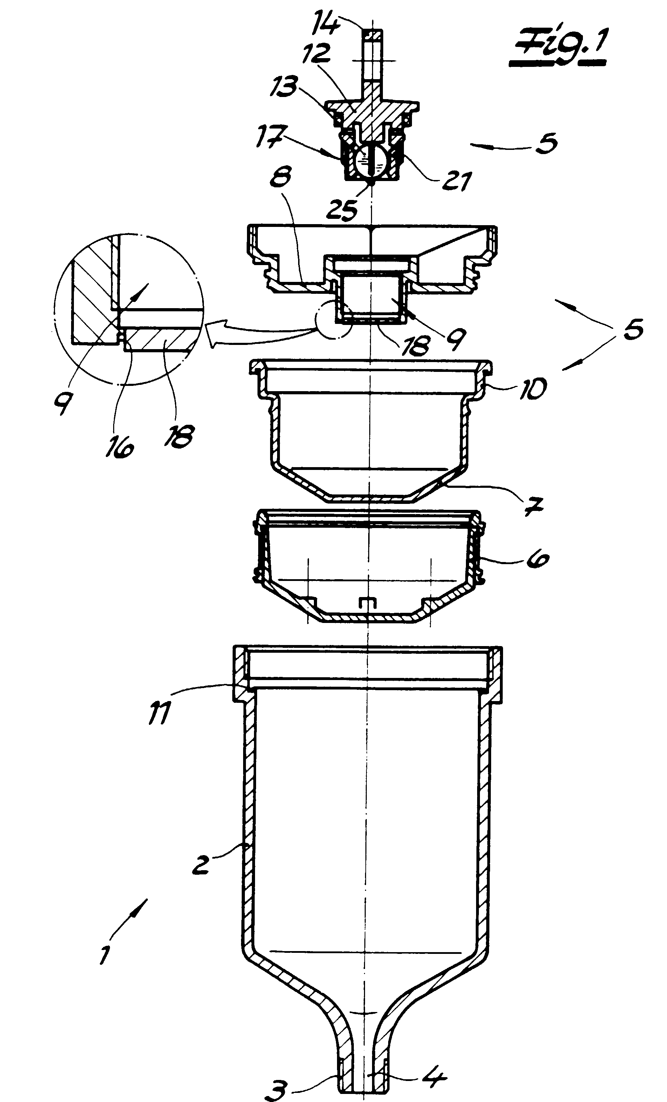

Im folgenden wird die Erfindung anhand einer lediglich ein Ausführungsbeispiel darstellenden Zeichnung ausführlicher erläutert. Es zeigen in schematischer Darstellung
- Fig. 1: in einem Längsschnitt einen erfindungsgemäßen Schmierstoffspender, wobei die einzelnen Bauteile auseinandergezogen sind,
- Fig. 2: in gegenüber der Fig. 1 wesentlich vergrößertem Maßstab das Magazin aus dem Gegenstand der Fig. 1,
- Fig. 3: den Gegenstand nach Fig. 2 von unten und
- Fig. 4: den Gegenstand nach Fig. 1 im zusammengebauten Zustand.

Der in den Figuren dargestellte Schmierstoffspender 1 ist zur gasgesteuerten Abgabe eines Schmierstoffes an eine Maschine bestimmt. Zum grundsätzlichen Aufbau gehören ein Gehäuse 2 für die Aufnahme eines Schmierstoffvorrates, ein Maschinenanschlußteil 3 mit Schmierstoffabgabekanal 4 an einer Seite des Gehäuses 2, eine Gasentwicklungszelle 5 an der dem Anschlußteil 3 gegenüberliegenden Seite des Gehäuses 2, die ein Fördergas entwickelt, und ein in das Gehäuse 2 eingepaßter Schmiermittelförderkolben 6, der unmittelbar oder mittelbar vom Fördergas beaufschlagt ist. Unmittelbare Beaufschlagung meint, daß das Gas, welches sich in dem Schmierstoffspender 1 entwickelt, wenn seine Funktion eingeschaltet ist, den Schmiermittelförderkolben 6 unmittelbar beaufschlagt. Mittelbare Beaufschlagung meint, daß zwischen dem Schmiermittelförderkolben 6 und der Gasentwicklungszelle 5 ein aufblähbarer Gummikörper 7 angeordnet ist.

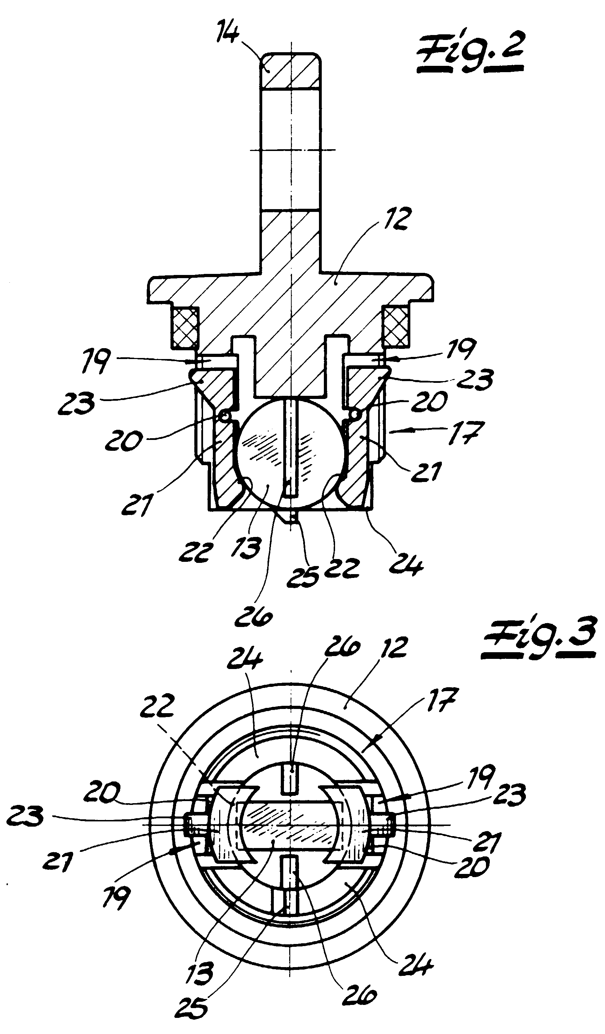

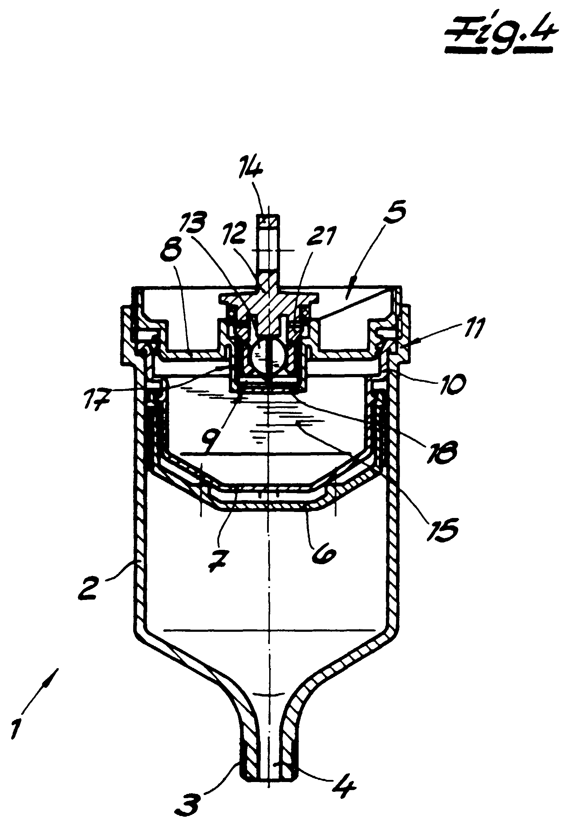

Bei dem dargestellten Schmierstoffspender 1 ist die Gasentwicklungszelle 5 als ein selbständiges Bauteil ausgeführt, welches aus einem Bodenteil 8, einer Magazinaufnahme 9 und einer Abdeckkappe 10 besteht sowie in eine Bodenteilaufnahme 11 des Gehäuses 2 als Boden einsetzbar ist, insoweit wird zunächst auf die Figur 4 verwiesen. In die Magazinaufnahme 9 ist das Magazin 12 eingesetzt. Die Einzelheiten des Magazins 12 ergeben sich aus einer vergleichenden Betrachtung der Figuren 2 und 3. Man erkennt, daß in die Magazinaufnahme 9 ein Magazin 12 mit einem darin untergebrachten galvanischen Gasentwicklungselement 13 einschraubbar ist, und zwar mit Hilfe eines Betätigungshandgriffs 14. In dem Raum zwischen Bodenteil 8 und Abdeckkappe 10 ist eine Gasentwicklungsflüssigkeit 15 angeordnet, mit der das Gasentwicklungselement 13 bei Kontakt gasbildend reagiert. Von der Gasentwicklungsflüssigkeit 15 ist das in die Magazinaufnahme 9 eingesetzte Magazin 12 mit dem Gasentwicklungselement 13 im jungfräulichen Zustand der Gasentwicklungszelle durch eine Trennwand getrennt. Die Anordnung ist so getroffen, daß das Magazin 12 als zylindrisches Bauteil 17 mit Aufnahmekammer für das Gasentwicklungselement 13 sowie mit einem Absprengboden 18 als Trennwand ausgeführt ist. Der vergrößerte Ausschnitt bei 18 läßt eine Sollbruchnut 16 erkennen. Das zylindrische Bauteil weist in der Zylinderwand Spalträume 19 und in diesen zweiarmige, um Gelenkelemente 20 schwenkbare Hebel 21 auf, deren abdeckkappenseitiger Hebelarm Greiferausformungen 22 für das Gasentwicklungselement 13 und deren betätigungshandgriffseitiger Hebelarm Steuerelemente 23 aufweist, die beim Einschrauben des Magazins 12 in die Magazinaufnahme 9 mit der Wand der Magazinaufnahme 9 wechselwirken.

Die Gelenkelemente 20 sind um die Achse der Gelenkelemente 20 so schwenkbar, daß die Greiferausformungen 22 das Gasentwicklungselement 13 freigeben. Es fällt in die Gasentwicklungsflüssigkeit 15 und die Gaserzeugung setzt ein. Nach Maßgabe der Gaserzeugung erfolgt die Schmierstoffspende. Durch Auslegung ist zu erreichen, daß der Schmierstoffspender 1 mit einer bestimmten Spenderrate arbeitet.

Insbesondere aus einer vergleichenden Betrachtung der Figuren 2 und 3 entnimmt man, daß das zylindrische Bauteil 17 im Bereich zwischen den Spalträumen 19 zur Abdeckkappe 10 hin die Greiferausformungen 22 an dem abdeckkappenseitigen Hebelarm mit Verlängerungen 24 überragt. Mit diesen Verlängerungen 24 ist der Absprengboden 18 beim Einschrauben des Magazins 12 in die Magazinaufnahme 9 zum Zwecke der Inbetriebnahme des Schmierstoffspenders absprengbar. Andererseits ist die Auslegung so getroffen, daß dabei die Greiferausformungen 22 das Gasentwicklungselement 13 freigeben. Die Verlängerungen 24 tragen einen Absprengfortsatz 25.

Die Figuren insgesamt, insbesondere aber die Figuren 2 und 3 lassen erkennen, daß bei dem beschriebenen Aufbau das Magazin 12 mit der Aufnahmekammer in dem zylindrischen Bauteil 17, die zweiarmigen Hebel 21 und die Gelenkelemente 20 einteilig im Wege des Spritzgießens aus thermoplastischem Kunststoff geformt werden können.

Nach bevorzugter Ausführungsform der Erfindung ist das Gasentwicklungselement 13 bezüglich seiner Positionierung bei dem beschriebenen Schmierstoffspender 1 als kreisförmige Platte ausgebildet, mit quer zur geometrischen Achse des zylindrischen Bauteils 17 verlaufender geometrischer Plattenachse in der Aufnahmekammer angeordnet und mit den Plattenflächen zwischen an das Magazin 12 angeformten Führungsleisten 26 geführt.

## Patentansprüche

1. Schmierstoffspender zur gasgesteuerten Abgabe eines Schmierstoffes an eine Maschine, - mit
einem Gehäuse für die Aufnahme eines Schmierstoffvorrates,
einem Maschinenanschlußteil mit Schmierstoffabgabekanal an einer Seite des Gehäuses,
einer Gasentwicklungszelle an der dem Anschlußteil gegenüberliegenden Seite des Gehäuses, die ein Fördergas entwickelt, und
einem in das Gehäuse eingepaßten Schmiermittelförderkolben, der unmittelbar oder mittelbar vom Fördergas beaufschlagt ist
wobei die Gasentwicklungszelle als ein selbstständiges Bauteil ausgeführt ist, welches aus einem Bodenteil, einer Magazinaufnahme und einer Abdeckkappe besteht sowie in eine Bodenteilaufnahme des Gehäuses als Boden eingesetzt ist,
wobei in die Magazinaufnahme ein Magazin mit einem darin untergebrachten galvanischen Gasentwicklungselement mit Hilfe eines Betätigungshandgriffes einschraubbar ist,
wobei in dem Raum zwischen Bodenteil und Abdeckkappe eine Gasentwicklungsflüssigkeit angeordnet ist, mit der das Gasentwicklungselement bei Kontakt gasbildend reagiert und von der das in die Magazinaufnahme eingesetzte Magazin mit dem Gasentwicklungselement in jungfräulichem Zustand der Gasentwicklungszelle durch eine Trennwand getrennt ist, und
wobei das Magazin als ein zylindrisches Bauteil ausgeführt ist, welches eine Aufnahmekammer für das Gasentwicklungselement und einen Absprengboden aufweist, welches zylindrische Bauteil in Zylinderwand-Spalträumen zweiarmige, um Gelenkelemente schwenkbare Hebel aufweist, deren abdeckkappenseitiger Hebelarm Greiferausformungen für das Gasentwicklungselement und deren betätigungshandgriffseitiger Hebelarm Steuerelemente aufweist, die beim Einschrauben des Magazins in die Magazinaufnahme mit der Wand der Magazinaufnahme wechselwirken und um die Achse der Gelenkelemente so schwenken, daß die Greiferausformungen das Gasentwicklungselement freigeben, **dadurch gekennzeichnet**, daß das zylindrische Bauteil (17) im Bereich zwischen den Spalträumen (19) zur Abdeckkappe (10) hin die Greiferausformungen (22) an dem abdeckkappenseitigen Hebelarm mit Verlängerungen (24) überragt, mit denen beim Einschrauben des Magazins (12) in die Magazinaufnahme (9) zum Zwecke der Inbetriebnahme des Schmierstoffspenders (1) der Absprengboden (18) absprengbar ist, während die Greiferausformungen (22) das Gasentwicklungselement (13) freigeben, und daß das Magazin (12) mit der Aufnahmekammer, die zweiarmigen Hebel (21) und die Gelenkelemente (20) einteilig im Wege des Spritzgießens aus thermoplastischem Kunststoff geformt sind.

2. Schmierstoffspender nach Anspruch 1, dadurch gekennzeichnet, daß das Gasentwicklungselement (13) als kreisförmige Platte ausgebildet, mit quer zur geometrischen Achse des zylindrischen Bauteils (17) verlaufender geometrischer Plattenachse in der Aufnahmekammer angeordnet und mit ihren Plattenflächen zwischen an das Magazin (12) angeformten Führungsleisten (26) geführt ist.

## Claims

1. A lubricant dispenser for the gas-controlled delivery of a lubricant to a machine, - having
a housing for receiving a lubricant supply,
a machine connection part comprising a lubricant delivery channel on one side of the housing,
a gas generation cell, which generates a delivery gas, on the opposite side of the housing to the connection part,
a lubricant delivery piston which is fitted into the housing and which is acted upon directly or indirectly by the delivery gas,
wherein the gas generation cell is designed as an autonomous component which consists of a base part, a magazine receiver and a covering cap, and can be inserted, as a base, in a base part receiver of the housing,
wherein a magazine with an electrochemical gas generation element accommodated therein can be screwed into the magazine receiver with the aid of an operating handle,
wherein a gas generation liquid is disposed in the space between the base part and the covering cap, with which gas generation liquid the gas generation element reacts on contact with the formation of a gas, and from which gas generation liquid the magazine comprising the gas generation element which is inserted in the magazine receiver is separated by a partition wall in the unused state of the gas generation cell, and
wherein the magazine is designed as a cylindrical component which comprises a receiving chamber for the gas generation element and a push-off base, which cylindrical component has two-armed levers which can swivel about joint elements and are disposed in cylinder wall gap spaces, the lever arm of which on the covering cap side comprises gripper formations for the gas generation element and the lever arm of which on the operating handle side comprises control elements, which control elements interact with the wall of the magazine receiver when the magazine is screwed into the magazine receiver and swivel about the axis of the joint elements so that the gripper formations release the gas generation element, characterised in that in the region between the gap spaces (19) and the covering cap (10) extensions (24) of the cylindrical component (17) project beyond the gripper formations (22) on the lever arm on the covering cap side, with which extensions the push-off base (18) can be pushed off for the purpose of setting the lubricant dispenser (1) in operation when the magazine (12) is screwed into the magazine receiver (9), whilst the gripper formations (22) release the gas generation element (13), and that the magazine (12), together with receiving chamber, the two-armed levers (21) and the joint elements (20), is moulded in one piece from a synthetic thermoplastic material by an injection moulding route.

2. A lubricant dispenser according to claim 1, characterised in that the gas generation element (13) is constructed as a circular plate which is disposed in the receiving chamber with its geometric plate axis extending transversely to the geometric axis of the cylindrical component (17) and is guided at its plate faces between guide ribs (26) which are integrally formed on the magazine (12).

## Revendications

1. Distributeur de lubrifiant pour la distribution contrôlée par un gaz d'un lubrifiant à une machine, comprenant
un corps pour recevoir une réserve de lubrifiant,
une pièce de connexion à la machine qui est pourvue d'un canal de distribution de lubrifiant et est disposée d'un côté du corps,
une cellule de génération de gaz qui est disposée du côté du corps opposé à la pièce de connexion et génère un gaz propulseur,
un piston de refoulement de lubrifiant qui est monté ajusté à l'intérieur du corps et est sollicité de manière directe ou indirecte par le gaz propulseur, la cellule de génération de gaz étant réalisée sous la forme d'un composant indépendant qui comprend un fond, un logement à cartouche et une coiffe de fermeture et est inséré en tant que fond dans un logement du corps destiné à recevoir le fond,
une cartouche contenant un élément de génération de gaz galvanique pouvant être vissée dans le logement à cartouche à l'aide d'une poignée d'actionnement,
un liquide de génération de gaz étant placé dans la chambre entre le fond et la coiffe de fermeture, liquide au contact duquel l'élément de génération de gaz réagit en formant du gaz et vis-à-vis duquel la cartouche contenant l'élément de génération de gaz insérée dans le logement à cartouche est isolé par une cloison tant que la cellule de génération de gaz est vierge, la cartouche étant réalisée sous la forme d'un élément cylindrique qui comporte une chambre réceptrice pour l'élément de génération de gaz et un fond operculé, lequel élément cylindrique comporte dans des cavités de la paroi de cylindre des leviers à deux bras qui pivotent autour d'éléments d'articulation, dont le bras de levier côté coiffe de fermeture porte des saillies de retenue pour l'élément de génération de gaz et dont le bras de levier côté poignée d'actionnement porte des éléments de commande qui, lorsqu'on visse la cartouche dans le logement à cartouche, coopèrent avec la paroi du logement à cartouche et pivotent autour de l'axe des éléments d'articulation de telle sorte que les saillies de retenue libèrent l'élément de génération de gaz,
caractérisé par le fait que l'élément cylindrique (17) dans la zone entre les cavités (19) dépasse en direction de la coiffe de fermeture (10) par rapport au bras de levier côté coiffe de fermeture par des prolongements (24) grâce auxquels, lors du vissage de la cartouche (12) dans le logement à cartouche (9) aux fins de mettre en service le distributeur de lubrifiant (1), le fond operculé (18) est crevé, tandis que les saillie de retenue (22) libèrent l'élément de génération de gaz (13)
et par le fait que la cartouche (12) avec sa chambre réceptrice, les leviers (21) à deux bras (21) et les éléments d'articulation (20) est moulée d'une pièce par moulage injection en matière plastique thermodurcissable.

2. Distributeur de lubrifiant selon la revendication 1, caractérisé par le fait que l'élément de génération de gaz (13) se présente sous la forme d'une plaque cylindro-circulairc, est placé dans la chambre réceptrice avec son axe géométrique disposé transversalement à l'axe géométrique de l'élément cylindrique (17) et est guidé par ses faces entre des nervures de guidage (26) aménagées sur la cartouche (12).
